# EUROPEAN PATENT APPLICATION

(11) **EP 2 367 381 A1**
(43) Date of publication of application: **21.09.2011**
(21) Application number: 11001860.3
(22) Date of filing: 07.03.2011
(51) Int. Cl.: H04W 48/08

(54) **Apparatuses, systems, and methods for closed subscriber group (CSG) membership synchronization**

(30) Priority: 05.03.2010 US 311045 P; 04.03.2011 US 40427
(71) Applicant: HTC Corporation, Taoyuan County 330 (TW)
(72) Inventor: Tiwari, Kundan, Taoyuan City Taoyuan County 330 (TW)
(74) Representative: Schmidbauer, Andreas Konrad

(57) **Abstract**

A mobile communications device with a wireless module and a controller module is provided. The wireless module performs wireless transceiving to and from a cellular station of a service network, and the cellular station is associated with a Closed Subscriber Group (CSG) identification (ID) and configured to operate in a hybrid access mode. The controller module transmits a Circuit Switched (CS) or Packet Switched (PS) domain request message to the cellular station via the wireless module, and receives a rejection message corresponding to the CS or PS domain request message from the cellular station via the wireless module. Also, the controller module determines whether the rejection message indicates unauthorized membership of the CSG ID, and removes the CSG ID from an allowed CSG list in response to the CSG ID being in the allowed CSG list and the rejection message indicating unauthorized membership of the CSG ID.

## Description

### CROSS REFERENCE TO RELATED APPLICATIONS

This Application claims priority of U.S. Provisional Application No. 61/311,045, filed on March 05, 2010, and the entirety of which is incorporated by reference herein.

### BACKGROUND OF THE INVENTION

### Field of the Invention

The invention generally relates to maintenance of allowed Closed Subscriber Group (CSG) lists, and more particularly, to apparatuses, systems, and methods for synchronizing the allowed CSG lists between a network side and a User Equipment (UE) side through a location registration procedure, service access procedure, attachment procedure, routing area update procedure, or tracking area update procedure.

### Description of the Related Art

In a typical mobile communications environment, a user equipment (UE) may communicate voice and/or data signals with one or more service networks via cellular stations of service networks. The wireless communications between the UE and the service networks may be in compliance with various wireless technologies, such as the Global System for Mobile communications (GSM) technology, General Packet Radio Service (GPRS) technology, Enhanced Data rates for Global Evolution (EDGE) technology, Wideband Code Division Multiple Access (WCDMA) technology, Code Division Multiple Access 2000 (CDMA 2000) technology, Time Division-Synchronous Code Division Multiple Access (TD-SCDMA) technology, Worldwide Interoperability for Microwave Access (WiMAX) technology, Long Term Evolution (LTE) technology, and others.

Particularly, in a service network in compliance with the WCDMA or LTE technology, a special cellular station, called Home Node-B (HNB), or Home e-Node-B (HeNB) is introduced, which is typically designed for improving wireless reception quality of service networks for indoor coverage, such as at a home or in a small business space. When being configured to operate in an open access mode, the HNB or HeNB may provide service access to subscribers of any service network (subject to the roaming agreement reached therebetween). Specifically, the HNB or HeNB may be associated with a Closed Subscriber Group (CSG) and may only provide service access to the subscribers belonging to the associated CSG when operating in a closed access mode. Alternatively, the HNB or HeNB may be configured to operate in a hybrid access mode, in which, not only the subscribers belonging to the associated CSG, but also the subscribers of any service network (subject to the roaming agreement reached therebetween) may obtain service access.

Take the WCDMA or LTE technology in compliance with the 3GPP TS 25.304 specification, v.8.7.0 (referred to herein as the 25.304 specification), the 3GPP TS 22.220 specification, v.9.2.0 (referred to herein as the 22.220 specification), and the 3GPP TS 24.008 specification, v.9.1.0 (referred to herein as the 24.008 specification) for example. A UE may perform a scan for available CSG cellular stations following a request by a user, and display the available CSG cellular stations with the associated names or CSG identifications (CSG IDs) and the names of the service networks to which the available CSG cellular stations belong. The UE may further prompt an indication to the user as to which of the available CSG cellular stations is contained in an Allowed CSG List, wherein the Allowed CSG List is a list used for storing the CSG IDs of the CSG cellular stations the UE is authorized to access. Subsequently, the user may select one of the available CSG cellular stations and the UE may reselect to the selected CSG cellular station from the serving cellular station, and obtain preferential Quality of Service (QoS) from the CSG cellular station.

### BRIEF SUMMARY OF THE INVENTION

In one aspect of the invention, a mobile communications device comprising a wireless module and a controller module is provided. The wireless module performs wireless transceiving to and from a cellular station of a service network, and the cellular station is associated with a Closed Subscriber Group (CSG) identification (ID) and configured to operate in a hybrid access mode. The controller module transmits a Circuit Switched (CS) or Packet Switched (PS) domain request message to the cellular station via the wireless module, and receives a rejection message corresponding to the CS or PS domain request message from the cellular station via the wireless module. Also, the controller module determines whether the rejection message indicates unauthorized membership of the CSG ID, and removes the CSG ID from an allowed CSG list in response to the CSG ID being in the allowed CSG list and the rejection message indicating unauthorized membership of the CSG ID.

In another aspect of the invention, a method for CSG membership synchronization in a mobile communications device is provided. The method comprises the steps of transmitting a CS or PS domain request message to a cellular station of a service network, wherein the cellular station is associated with a CSG ID and configured to operate in a hybrid access mode, receiving a rejection message corresponding to the CS or PS domain request message from the cellular station, determining whether the rejection message indicates unauthorized membership of the CSG ID, and removing the CSG ID from an allowed CSG list in response to the CSG ID being in the allowed CSG list and the rejection message indicating unauthorized membership of the CSG ID.

In yet another aspect of the invention, a service network comprising a cellular station and a control node is provided. The cellular station, associated with a CSG ID and configured to operate in a hybrid access mode, performs wireless transceiving to and from a mobile communication device. The control node receives a CS or PS domain request message from the mobile communication device via the cellular station, and determines whether the cellular station has authorized membership of the CSG ID in response to the CS or PS domain request message. Also, the control node transmits a rejection message with a rejection cause to the mobile communication device via the cellular station in response to the mobile communication device not having authorized membership of the CSG ID.

In still another aspect of the invention, a method for CSG membership synchronization by a service network is provided. The method comprises the steps of configuring a cellular station associated with a CSG ID to operate in a hybrid access mode for performing wireless transceiving to and from a mobile communication device, receiving a CS or PS domain request message from the mobile communication device via the cellular station, determining whether the mobile communication device has authorized membership of the CSG ID in response to the CS or PS domain request message, and transmitting a rejection message with a rejection to the mobile communication device via the cellular station in response to the mobile communication device not having authorized membership of the CSG ID.

Other aspects and features of the present invention will become apparent to those with ordinarily skill in the art upon review of the following descriptions of specific embodiments of apparatuses, systems, and methods for CSG membership synchronization.

### BRIEF DESCRIPTION OF DRAWINGS

The invention can be more fully understood by reading the subsequent detailed description and examples with references made to the accompanying drawings, wherein:

Fig. 1 is a block diagram illustrating a mobile communications environment according to an embodiment of the invention;

Fig. 2 is a message sequence chart illustrating a location registration procedure according to an embodiment of the invention;

Fig. 3 is a message sequence chart illustrating a connection management procedure according to an embodiment of the invention;

Fig. 4 is a message sequence chart illustrating a service access procedure according to an embodiment of the invention;

Fig. 5 is a message sequence chart illustrating an attachment procedure according to an embodiment of the invention;

Fig. 6 is a message sequence chart illustrating a routing area update procedure according to an embodiment of the invention;

Fig. 7 is a message sequence chart illustrating a tracking area update procedure according to an embodiment of the invention;

Fig. 8 is a flow chart illustrating a method for CSG membership synchronization in a mobile communications device according to an embodiment of the invention; and

Fig. 9 is a flow chart illustrating a method for CSG membership synchronization by a service network according to an embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The 3GPP specifications are used to teach the spirit of the invention, and the invention is not limited thereto.

It is noted that, for the case where a UE camps on a CSG cellular station operating in the hybrid access mode, the service network may authorize the membership of the CSG ID of the CSG cellular station with a valid period of time to the UE. Generally, the UE may add the CSG ID in the Allowed CSG List and obtain preferential Quality of Service (QoS) from the CSG cellular station once receiving the authorization. When the valid period of time expires, the service network may transmit an Over-The-Air (OTA) message, such as a Short Message Service (SMS) message, to request the UE to remove the CSG ID of the CSG cellular station from the Allowed CSG List. However, the delivery of the OTA message may be unsuccessful due to various reasons, e.g., the mobile communications device is moved to a place with bad signal reception or no signal reception at all (such as when in an elevator or basement). The unsuccessful delivery of the OTA message may cause unsynchronization between the service network and the UE regarding the membership of the CSG ID. That is, the UE mistakenly considers the membership of the CSG ID as valid and continues to camp on the CSG cellular station, while the service network cancels the membership of the CSG ID granted to the UE. As a result, the UE faultly camps on the CSG cellular station which no longer provides preferential QoS to the UE.

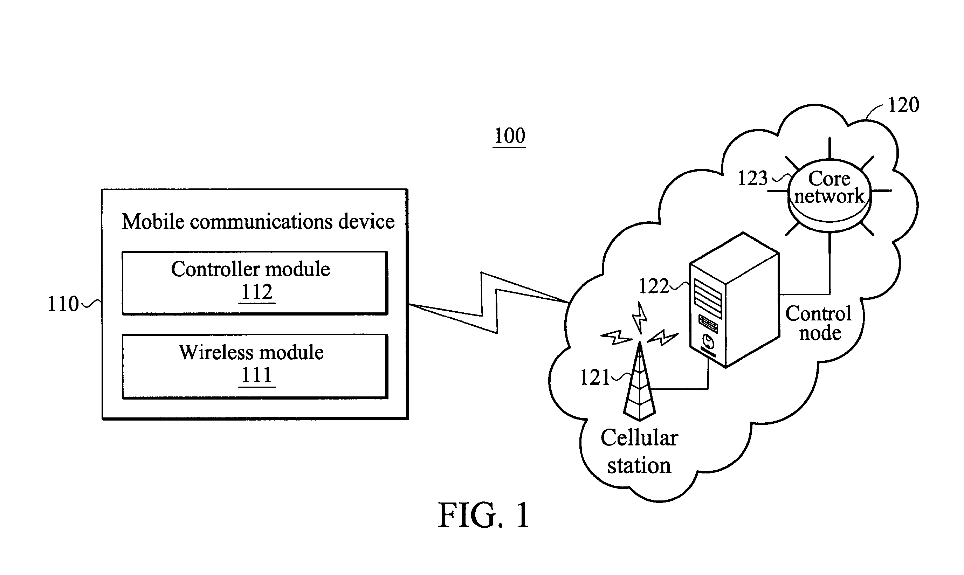

In order to solve the aforementioned problem, the invention provides apparatuses, systems, and methods for CSG membership synchronization through location registration procedures, connection management procedures, service access procedures, attachment procedures, routing area update procedures, and tracking area update procedures. Fig. 1 is a block diagram illustrating a mobile communications environment according to an embodiment of the invention. In the mobile communications environment 100, the mobile communications device 110 is wirelessly connected to the cellular station 121 of the service network 120 for obtaining wireless service access. Generally, the cellular station 121 may be referred to as a base station or an access station, or may be referred to as an HNB in a WCDMA network or a HeNB in an LTE network, which is controlled by the control node 122 to provide the functionality of wireless transceiving for the service network 120. In this embodiment, the cellular station 121 is a CSG cellular station which is configured to operate in a hybrid access mode and is associated with a CSG ID. The mobile communication device 110 comprises a wireless module 111 for performing the functionality of wireless transceiving to and from the cellular station 121. To further clarify, the wireless module 111 may comprise a baseband unit (not shown) and a radio frequency (RF) unit (not shown). The baseband unit may contain multiple hardware devices to perform baseband signal processing, including analog to digital conversion (ADC)/digital to analog conversion (DAC), gain adjusting, modulation/demodulation, encoding/decoding, and so on. The RF unit may receive RF wireless signals, convert the received RF wireless signals to baseband signals, which are processed by the baseband unit, or receive baseband signals from the baseband unit and convert the received baseband signals to RF wireless signals, which are later transmitted. The RF unit may also contain multiple hardware devices to perform radio frequency conversion. For example, the RF unit may comprise a mixer to multiply the baseband signals with a carrier oscillated in the radio frequency of the wireless communications system, wherein the radio frequency may be 900MHz, 1900MHz, or 2100MHz utilized in WCDMA systems, or may be 900MHz, 2100MHz, or 2.6GHz utilized in LTE systems, or others depending on the radio access technology (RAT) in use. Also, the mobile communication device 110 comprises a controller module 112 for controlling the operation of the wireless module 111 and other functional components, such as a display unit and/or keypad serving as the MMI (man-machine interface), a storage unit storing the program codes of applications or communication protocols, or others. In one embodiment, the service network 120 may be a WCDMA network and the mobile communications device 110 may be a User Equipment (UE) in compliance with the 25.304, 22.220, and 24.008 specifications, and/or other related specifications of the WCDMA technology; while in another embodiment, the service network 120 may be an LTE network and the mobile communications device 110 may be a UE in compliance with the 25.304, 22.220, and 24.008 specifications and/or other related specifications of the LTE technology. Alternatively, the mobile communications device 110 may be a UE in compliance with both of the specifications of the WCDMA and LTE communication protocols, and the invention is not limited thereto.

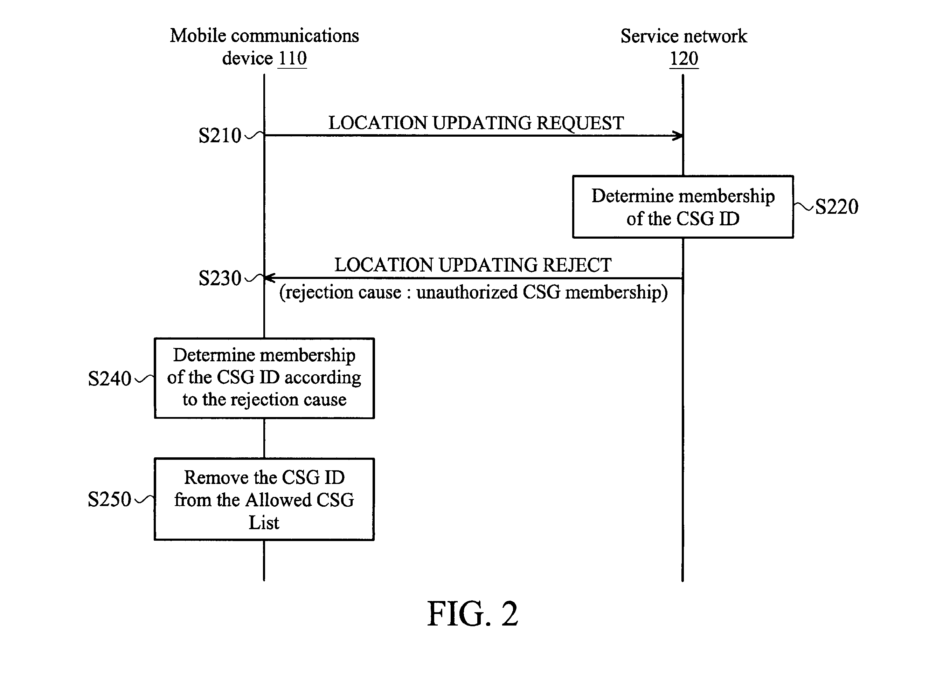

To be more specific, the controller module 112 controls the wireless module 111 for performing connection management procedures, service access procedures, attachment procedures, routing area update procedures, and tracking area update procedures with the service network 120 via the cellular station 121. Fig. 2 is a message sequence chart illustrating a location registration procedure according to an embodiment of the invention. The location registration procedure may be triggered for registering the mobile communications device 110 to the service network 120 after the mobile communications device 110 is successfully camped on the cellular station 121. To start the location registration procedure, the controller module 112 transmits a LOCATION UPDATING REQUEST message to the cellular station 121 via the wireless module 111 (step S210). The LOCATION UPDATING REQUEST message comprises the registration area information, such as the Public Land Mobile Network (PLMN) ID of the service network 120. When receiving the LOCATION UPDATING REQUEST message, the control node 122 determines whether the mobile communication device 110 has authorized membership of the CSG ID of the cellular station 121 (step S220). In this embodiment, the control node 122 replies to the mobile communications device 110 with a LOCATION UPDATING REJECT message via the cellular station 121 due to the fact that the mobile communication device 110 doesn't have authorized membership of the CSG ID of the cellular station 121 (step S230). Specifically, the LOCATION UPDATING REJECT message includes a rejection cause for indicating unauthorized membership of the CSG ID of the cellular station 121. When receiving the LOCATION UPDATING REJECT message, the mobile communications device 110 retrieves the rejection cause and determines whether unauthorized membership of the CSG ID is indicated (step S240). In this embodiment, since the rejection cause indicates unauthorized membership of the CSG ID, the controller module 112 removes the CSG ID from the Allowed CSG List (step S250). Specifically, the controller module 112 may first determine whether the CSG ID is already in the Allowed CSG List, and then remove the CSG ID from the Allowed CSG List only if the CSG ID is already in the Allowed CSG List. Thus, the mobile communications device 110 may consider the cellular station 121 as a CSG cellular station from which it doesn't have authorized membership to obtain wireless services. It is noted that, in addition to the management of the CSG ID, other operations regarding the location registration are also involved. However, detailed descriptions are omitted here for brevity as it is beyond the scope of the invention. For detailed descriptions of the location registration, reference may be made to the 24.008 specification.

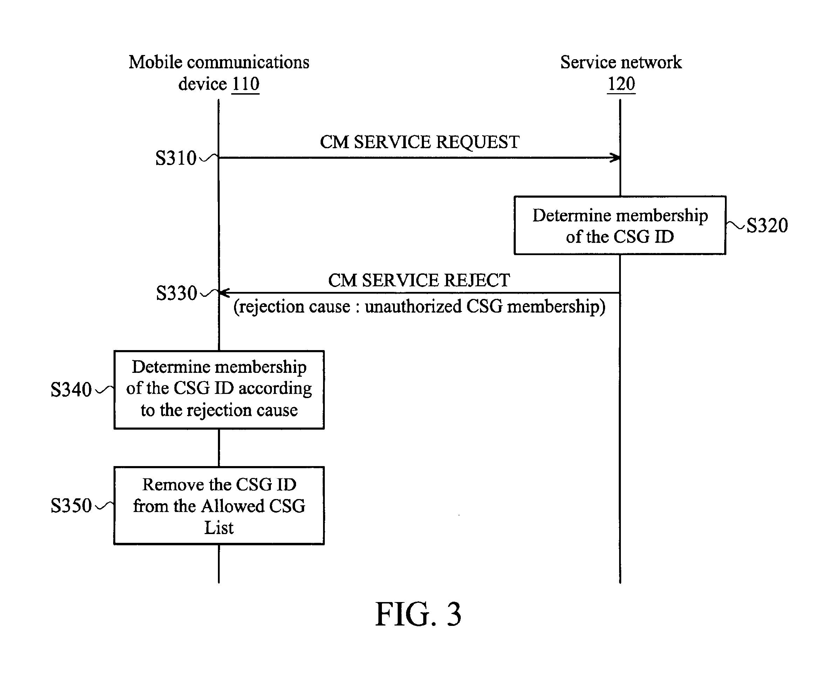

Fig. 3 is a message sequence chart illustrating a connection management procedure according to an embodiment of the invention. The connection management procedure may be triggered for requesting service access to the Circuit Switched (CS) domain of the service network 120, after the mobile communications device 110 has successfully camped on the cellular station 121 and registered to the CS domain of the service network 120. Specifically, the mobile communications device 110 may perform a location registration procedure to register itself to the service network after camping on the cellular station 121. Detailed descriptions of the location registration procedure are omitted here for brevity as it is beyond the scope of the invention. To start the connection management (CM) procedure, the controller module 112 transmits a CM SERVICE REQUEST message to the cellular station 121 via the wireless module 111 (step S310). The CM SERVICE REQUEST message comprises the information concerning the mobile identity of the mobile communications device 110 and the CM service type. The CM service type may identity the requested type of transaction, e.g., mobile originating (MO) call establishment, emergency call establishment, SMS, supplementary service activation, location services, etc. When receiving the CM SERVICE REQUEST message, the control node 122 determines whether the mobile communication device 110 has authorized membership of the CSG ID of the cellular station 121 (step S320). In this embodiment, the control node 122 replies to the mobile communications device 110 with a CM SERVICE REJECT message via the cellular station 121 due to the fact that the mobile communication device 110 doesn't have authorized membership of the CSG ID of the cellular station 121 (step S330). Specifically, the CM SERVICE REJECT message includes a rejection cause for indicating unauthorized membership of the CSG ID of the cellular station 121. When receiving the CM SERVICE REJECT message, the mobile communications device 110 retrieves the rejection cause and determines whether unauthorized membership of the CSG ID is indicated (step S340). In this embodiment, since the rejection cause indicates unauthorized membership of the CSG ID, the controller module 112 removes the CSG ID from the Allowed CSG List (step S350). Specifically, the controller module 112 may first determine whether the CSG ID is already in the Allowed CSG List, and then remove the CSG ID from the Allowed CSG List only if the CSG ID is already in the Allowed CSG List. Thus, the mobile communications device 110 may consider the cellular station 121 as a CSG cellular station from which it doesn't have authorized membership to obtain wireless services. It is noted that, in addition to the management of the CSG ID, other operations regarding the connection establishment are also involved. However, detailed descriptions are omitted here for brevity as it is beyond the scope of the invention. For detailed descriptions of the connection establishment, reference may be made to the 24.008 specification.

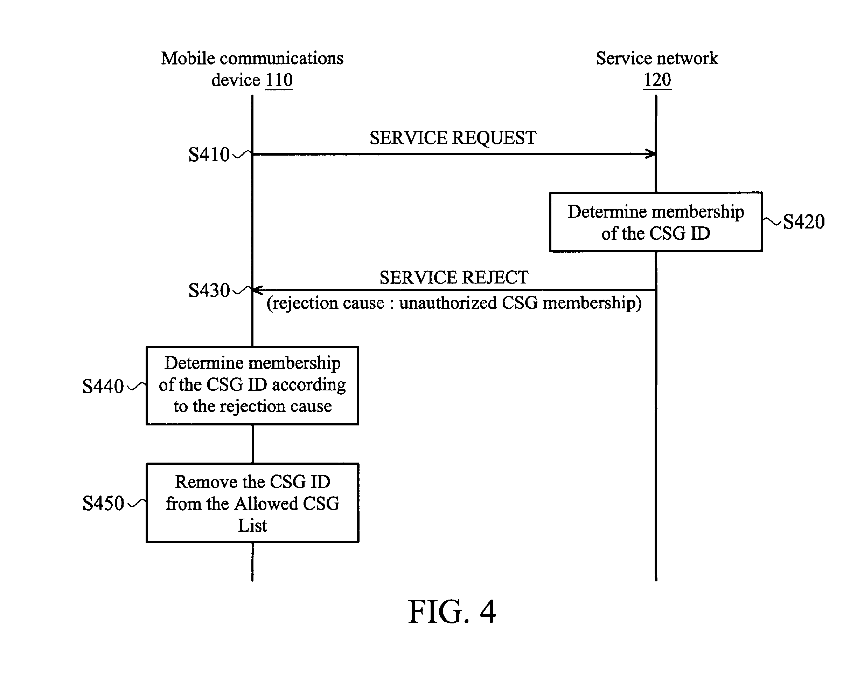

Fig. 4 is a message sequence chart illustrating a service access procedure according to an embodiment of the invention. The service access procedure may be triggered to request service access to the Packet Switched (PS) domain of the service network 120 after the mobile communications device 110 has successfully camped on the cellular station 121 and registered to the PS domain of the service network 120. To start the service access procedure, the controller module 112 transmits a SERVICE REQUEST message to the cellular station 121 via the wireless module 111 (step S410). The SERVICE REQUEST message comprises the information concerning the requested service, such as the type of the requested service. When receiving the SERVICE REQUEST message, the control node 122 determines whether the mobile communication device 110 has authorized membership of the CSG ID of the cellular station 121 (step S420). Subsequently, the control node 122 replies to the mobile communications device 110 with a SERVICE REJECT message via the cellular station 121 due to fact that the mobile communications device 110 doesn't have authorized membership of the CSG ID of the cellular station 121 (step S430). Specifically, the SERVICE REJECT message includes a rejection cause for indicating unauthorized membership of the CSG ID of the cellular station 121. When receiving the SERVICE REJECT message, the mobile communications device 110 retrieves the rejection cause and determines whether authorized membership of the CSG ID is indicated (step S440). In this embodiment, since the rejection cause indicates unauthorized membership of the CSG ID, the controller module 112 removes the CSG ID from the Allowed CSG List (step S450). Specifically, the controller module 112 may first determine whether the CSG ID is already in the Allowed CSG List, and then remove the CSG ID from the Allowed CSG List only if the CSG ID is already in the Allowed CSG List. Thus, the mobile communications device 110 may consider the cellular station 121 as a CSG cellular station from which it doesn't have authorized membership to obtain service access. It is noted that, in addition to the management of the CSG ID, other operations regarding the PS domain service request are also involved. However, detailed descriptions are omitted here for brevity as it is beyond the scope of the invention. For detailed descriptions of the PS domain service requests, reference may be made to the 24.008 specification and the 3GPP TS 24.301 specification, v 9.2.0 (referred to herein as the 24.301 specification).

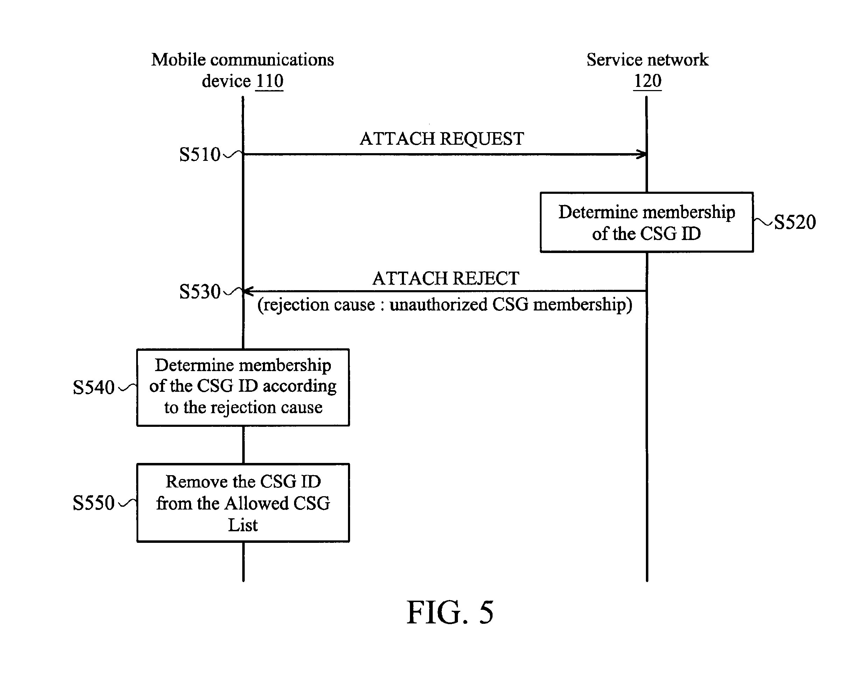

Fig. 5 is a message sequence chart illustrating an attachment procedure according to an embodiment of the invention. The attachment procedure may be triggered to register the mobile communications device 110 to the PS domain of the service network so that the mobile communications device 110 may start a packet data session. To start the attachment procedure, the controller module 112 transmits an ATTACH REQUEST message to the cellular station 121 via the wireless module 111 (step S510). The ATTACH REQUEST message comprises the registration information concerning the mobile communications device 110. When receiving the ATTACH REQUEST message, the control node 122 determines whether the mobile communication device 110 has authorized membership of the CSG ID of the cellular station 121 (step S520). Subsequently, the control node 122 replies to the mobile communications device 110 with an ATTACH REJECT message via the cellular station 121 due to the fact that the mobile communications device 110 doesn't have authorized membership of the CSG ID of the cellular station 121 (step S530). Specifically, the ATTACH REJECT message includes a rejection cause for indicating unauthorized membership of the CSG ID of the cellular station 121. When receiving the ATTACH REJECT message, the mobile communications device 110 retrieves the rejection cause and determines whether authorized membership of the CSG ID is indicated (step S540). In this embodiment, since the rejection cause indicates unauthorized membership of the CSG ID, the controller module 112 removes the CSG ID from the Allowed CSG List (step S550). Specifically, the controller module 112 may first determine whether the CSG ID is already in the Allowed CSG List, and then remove the CSG ID from the Allowed CSG List only if the CSG ID is already in the Allowed CSG List. Thus, the mobile communications device 110 may consider the cellular station 121 as a CSG cellular station from which it doesn't have authorized membership to obtain service access. It is noted that, in addition to the management of the CSG ID, other operations regarding the attachment from the mobile communications device 110 to the PS domain of the service network 120 are also involved. However, detailed descriptions are omitted here for brevity as it is beyond the scope of the invention. For detailed descriptions of the attachment procedure, reference may be made to the 24.008 specification.

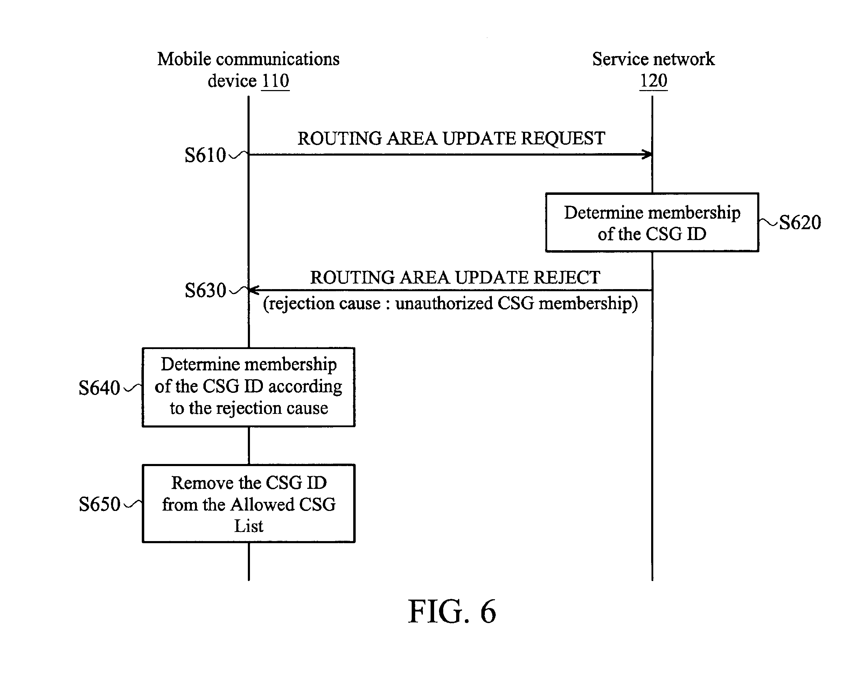

Fig. 6 is a message sequence chart illustrating a routing area update procedure according to an embodiment of the invention. The routing area update procedure may be triggered by the mobile communications device 110 to inform the service network 120 that it is about to be moved from one routing area to another routing area. To start the routing area update procedure, the controller module 112 transmits a ROUTING AREA UPDATE REQUEST message to the cellular station 121 via the wireless module 111 (step S610). The ROUTING AREA UPDATE REQUEST message comprises the information concerning the new routing area. When receiving the ROUTING AREA UPDATE REQUEST message, the control node 122 determines whether the mobile communication device 110 has authorized membership of the CSG ID of the cellular station 121 (step S620). Subsequently, the control node 122 replies to the mobile communications device 110 with a ROUTING AREA UPDATE REJECT message via the cellular station 121 due to the fact that the mobile communication device 110 doesn't have authorized membership of the CSG ID of the cellular station 121 (step S630). Specifically, the ROUTING AREA UPDATE REJECT message includes a rejection cause for indicating unauthorized membership of the CSG ID of the cellular station 121. When receiving the ROUTING AREA UPDATE REJECT message, the mobile communications device 110 retrieves the rejection cause and determines whether authorized membership of the CSG ID is indicated (step S640). In this embodiment, since the rejection cause indicates unauthorized membership of the CSG ID, the controller module 112 removes the CSG ID from the Allowed CSG List (step S650). Specifically, the controller module 112 may first determine whether the CSG ID is already in the Allowed CSG List, and then remove the CSG ID from the Allowed CSG List only if the CSG ID is already in the Allowed CSG List. Thus, the mobile communications device 110 may consider the cellular station 121 as a CSG cellular station from which it doesn't have authorized membership to obtain service access. It is noted that, in addition to the management of the CSG ID, other operations regarding the update of routing area are also involved. However, detailed descriptions are omitted here for brevity as it is beyond the scope of the invention. For detailed descriptions of the routing area update, reference may be made to the 24.008 specification.

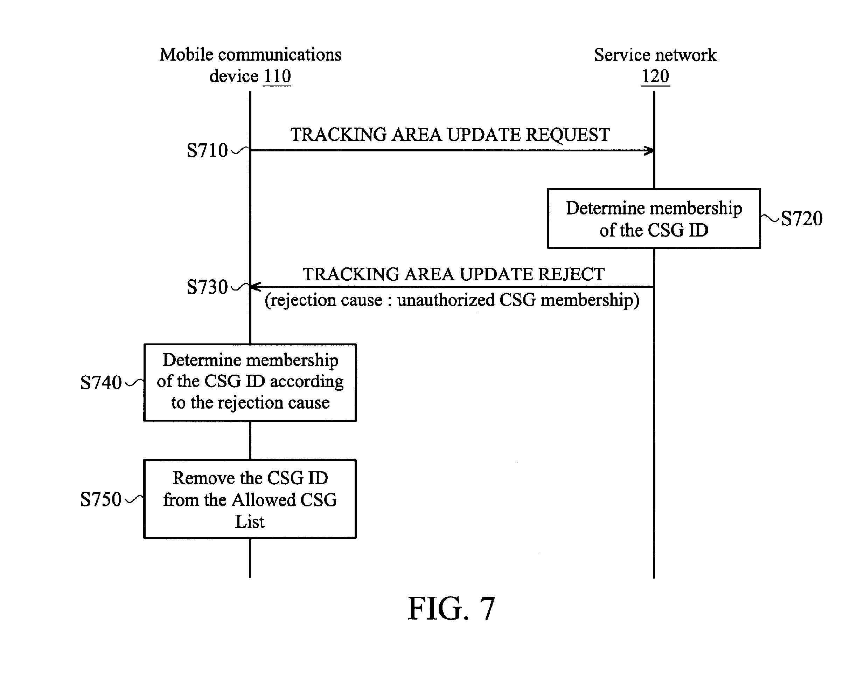

Fig. 7 is a message sequence chart illustrating a tracking area update procedure according to an embodiment of the invention. The tracking area update procedure may be triggered by the mobile communications device 110 to inform the service network 120 that it is about to be moved from one tracking area to another tracking area. To start the tracking area update procedure, the controller module 112 transmits a TRACKING AREA UPDATE REQUEST message to the cellular station 121 via the wireless module 111 (step S710). The TRACKING AREA UPDATE REQUEST message comprises the information concerning the new tracking area. When receiving the TRACKING AREA UPDATE REQUEST message, the control node 122 determines whether the mobile communication device 110 has authorized membership of the CSG ID of the cellular station 121 (step S720). Subsequently, the control node 122 replies to the mobile communications device 110 with a TRACKING AREA UPDATE REJECT message via the cellular station 121 due to the fact that the mobile communication device 110 doesn't have authorized membership of the CSG ID of the cellular station 121 (step S730). Specifically, the TRACKING AREA UPDATE REJECT message includes a rejection cause for indicating unauthorized membership of the CSG ID of the cellular station 121. When receiving the TRACKING AREA UPDATE REJECT message, the mobile communications device 110 retrieves the rejection cause and determines whether authorized membership of the CSG ID is indicated (step S740). In this embodiment, since the rejection cause indicates authorized membership of the CSG ID, the controller module 112 removes the CSG ID from the Allowed CSG List (step S750). Specifically, the controller module 112 may first determine whether the CSG ID is already in the Allowed CSG List, and then remove the CSG ID from the Allowed CSG List only if the CSG ID is already in the Allowed CSG List. Thus, the mobile communications device 110 may consider the cellular station 121 as a CSG cellular station from which it doesn't have authorized membership to obtain service access. It is noted that, in addition to the management of the CSG ID, other operations regarding the update of tracking area are also involved. However, detailed descriptions are omitted here for brevity as it is beyond the scope of the invention. For detailed descriptions of the tracking area update, reference may be made to the 24.008 specification.

Since the CSG ID of the cellular station 121 is no longer in the Allowed CSG List, the mobile communications device 110 may proceed to perform any subsequent operation without the unsynchronization problem as described above. For the case where at least another CSG ID is present in the Allowed CSG List, the mobile communications device 110 may reselect to one of the cellular stations associated with the another CSG ID in the Allowed CSG List, so that the continuous obtainment of the preferential QoS may be achieved, or the mobile communications device 110 may reselect to the macro cellular station (not shown) of the cellular station 121 for obtaining normal QoS. For the case where no CSG ID is present in the Allowed CSG List, the mobile communications device 110 may stop the autonomous search for CSG cellular stations and just perform normal cell selection/reselection with non-CSG cellular stations from which only normal QoS may be obtained. Specifically, the controller module 112 stops requesting the wireless module 111 to search for CSG cellular stations after reselecting to one non-CSG cellular station, and stops transmitting a proximity indication to the service network 120 via the wireless module 111 when detecting nearness to the cellular station 121. Since the autonomous search for CSG cellular stations is turned off, unnecessary consumption of the battery power and the system resources of the mobile communications device 110 may be avoided. In addition, the service network 120 may not be required to assign to the mobile communications device 110 the autonomous gap for measuring inter-frequency cellular stations in response to the faultly transmitted proximity indication, and thus, the system and network resources of the service network 120 may be saved as well.

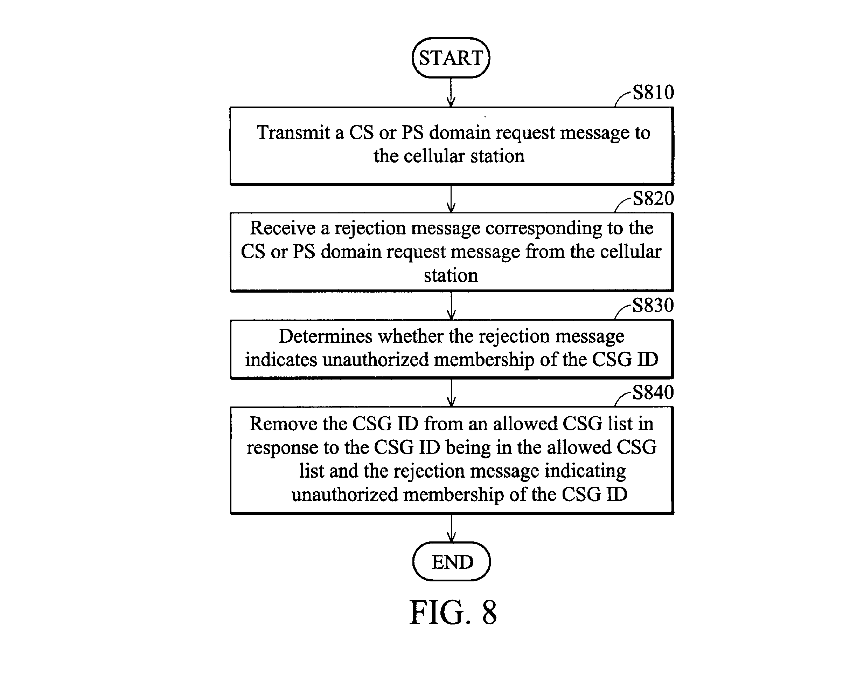

Fig. 8 is a flow chart illustrating a method for CSG membership synchronization in a mobile communications device according to an embodiment of the invention. In this embodiment, the mobile communications device is camped on a cellular station of the service network, wherein the cellular station is associated with a CSG ID and configured to operate in a hybrid access mode. To begin, the mobile communications device transmits a CS or PS domain request message to the cellular station (step S810). In one embodiment, the request message may be transmitted for registration, such as a LOCATION UPDATING REQUEST message as shown in Fig. 3 or a, or for requesting service access to the CS domain of the service network, such as a CM SERVICE REQUEST message as shown in Fig. 3. In another embodiment, the request message may be transmitted for requesting service access to the PS domain of the service network, such as a SERVICE REQUEST message as shown in Fig. 4. In other embodiments, the request message may be transmitted for registering to the service network, such as an ATTACH REQUEST message as shown in Fig. 5, or for location updates to the service network, such as a ROUTING AREA UPDATE REQUEST message as shown in Fig. 6, or a TRACKING AREA UPDATE REQUEST message as shown in Fig. 7. Next, the mobile communications device receives a rejection message corresponding to the request message from the cellular station (step S820), and accordingly determines whether the rejection message indicates unauthorized membership of the CSG ID (step S830). In one embodiment, the rejection message may be a LOCATION UPDATING REJECT message or CM SERVICE REJECT message corresponding to a previously transmitted LOCATION UPDATING REQUEST message or CM SERVICE REQUEST message, which includes a rejection cause for indicating unauthorized membership of the CSG ID of the cellular station. In other embodiments, the rejection message may be a SERVICE REJECT, ATTACH REJECT, ROUTING AREA UPDATE REJECT, or TRACKING AREA UPDATE REJECT message, respectively corresponding to a previously transmitted SERVICE REQUEST, ATTACH REQUEST, ROUTING AREA UPDATE REQUEST, or TRACKING AREA UPDATE REQUEST message, which includes a rejection cause for indicating unauthorized membership of the CSG ID of the cellular station. If the rejection message indicates unauthorized membership of the CSG ID, then the mobile communications device removes the CSG ID from the allowed CSG list in response to the CSG ID being in the allowed CSG list (step S840).

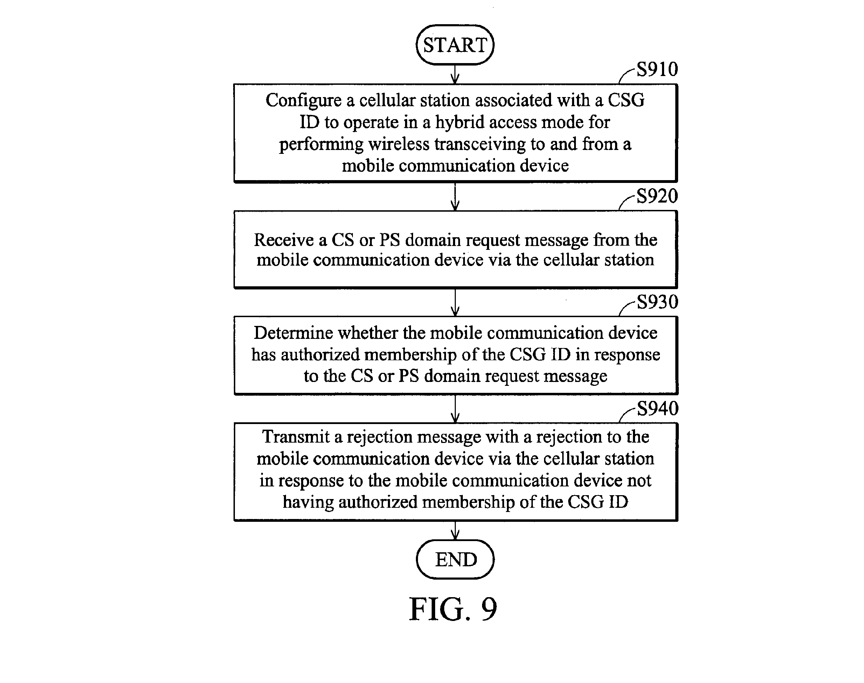

Fig. 9 is a flow chart illustrating a method for CSG membership synchronization by a service network according to an embodiment of the invention. To begin, the service network first configures a cellular station associated with a CSG ID to operate in a hybrid access mode for performing wireless transceiving to and from a mobile communication device (step S910). Next, the service network receives a CS or PS domain request message from the mobile communication device via the cellular station (step S920). In one embodiment, the request message may be received for registeration, such as a LOCATION UPDATING REQUEST message as shown in Fig. 2, or for requesting service access to the CS domain of the service network by the mobile communication device, such as a CM SERVICE REQUEST message as shown in Fig. 3. In another embodiment, the request message may be received for requesting service access to the PS domain of the service network by the mobile communication device, such as a SERVICE REQUEST message as shown in Fig. 4. In other embodiments, the request message may be received for registering to the service network by the mobile communication device, such as an ATTACH REQUEST message as shown in Fig. 5, or for location updates to the service network, such as a ROUTING AREA UPDATE REQUEST message as shown in Fig. 6, or a TRACKING AREA UPDATE REQUEST message as shown in Fig. 7. In response to the CS or PS domain request message, the service network determines whether the mobile communication device has authorized membership of the CSG ID (step S930). The service network further transmits a rejection message with a rejection cause to the mobile communication device via the cellular station in response to the mobile communication device not having authorized membership of the CSG ID (step S940). In one embodiment, the rejection message may be a LOCATION UPDATING REJECT message or CM SERVICE REJECT message corresponding to a previously transmitted LOCATION UPDATING REQUEST message or CM SERVICE REQUEST message, which includes a rejection cause for indicating unauthorized membership of the CSG ID of the cellular station. In other embodiments, the rejection message may be a SERVICE REJECT, ATTACH REJECT, ROUTING AREA UPDATE REJECT, or TRACKING AREA UPDATE REJECT message, respectively corresponding to a previously transmitted SERVICE REQUEST, ATTACH REQUEST, ROUTING AREA UPDATE REQUEST, or TRACKING AREA UPDATE REQUEST message, which includes a rejection cause for indicating unauthorized membership of the CSG ID of the cellular station. In this way, the mobile communication device may remove the CSG ID from an allowed CSG list according to the rejection cause included in the rejection message, and the CSG membership is synchronized between the mobile communication device and the service network.

While the invention has been described by way of example and in terms of preferred embodiment, it is to be understood that the invention is not limited thereto. Those who are skilled in this technology can still make various alterations and modifications without departing from the scope and spirit of this invention. For example, the service network may be a WCDMA network, an LTE network, an LTE-Advanced network, or a wireless network in compliance with any evolutionary technology of the WCDMA/LTE technology family. Therefore, the scope of the present invention shall be defined and protected by the following claims and their equivalents.

## Claims

1. A mobile communications device, comprising:
a wireless module performing wireless transceiving to and from a cellular station of a service network, wherein the cellular station is associated with a Closed Subscriber Group (CSG) identification (ID) and configured to operate in a hybrid access mode; and
a controller module transmitting a Circuit Switched (CS) or Packet Switched (PS) domain request message to the cellular station via the wireless module, receiving a rejection message corresponding to the CS or PS domain request message from the cellular station via the wireless module, determining whether the rejection message indicates unauthorized membership of the CSG ID, and removing the CSG ID from an allowed CSG list in response to the CSG ID being in the allowed CSG list and the rejection message indicating unauthorized membership of the CSG ID.

2. The mobile communications device of claim 1, wherein the controller module further determines whether the allowed CSG list comprises another CSG ID in response to removing the CSG ID, requests the wireless module to search for other cellular stations associated with the another CSG ID or a macro cellular station in response to the allowed CSG list comprising the another CSG ID, and reselects to one of the searched cellular stations or the macro cellular station from the cellular station via the wireless module.

3. The mobile communications device of claim 2, wherein the controller module further requests the wireless module to search for other cellular stations not associated with any CSG ID in response to the allowed CSG list not comprising any CSG ID, and reselects to one of the searched cellular stations from the cellular station via the wireless module.

4. The mobile communications device of claim 3, wherein the controller module further stops requesting the wireless module to search for cellular stations associated with any CSG ID after reselecting to the one of the searched cellular stations, and stops transmitting a proximity indication to the service network via the wireless module when detecting nearness to the cellular station.

5. The mobile communications device of claim 1, wherein the CS domain request message is a LOCATION UPDATING REQUEST or CM SERVICE REQUEST message, and the rejection message corresponding to the CS domain request message is a LOCATION UPDATING REJECT or CM SERVICE REJECT message.

6. The mobile communications device of claim 1, wherein the PS domain request message for PS domain is a one of the following:
a SERVICE REQUEST message;
an ATTACH REQUEST message;
a ROUTING AREA UPDATE REQUEST message; and
a TRACKING AREA UPDATE REQUEST message;
and the rejection message corresponding to the PS domain request message is one of the following:
a SERVICE REJECT message;
an ATTACH REJECT message;
a ROUTING AREA UPDATE REJECT message; and
a TRACKING AREA UPDATE REJECT message.

7. A method for Closed Subscriber Group (CSG) membership synchronization in a mobile communications device, comprising:
transmitting a Circuit Switched (CS) or Packet Switched (PS) domain request message to a cellular station of a service network, wherein the cellular station is associated with a CSG identification (CSG ID) and configured to operate in a hybrid access mode;
receiving a rejection message corresponding to the CS or PS domain request message from the cellular station;
determining whether the rejection message indicates unauthorized membership of the CSG ID; and
removing the CSG ID from an allowed CSG list in response to the CSG ID being in the allowed CSG list and the rejection message indicating unauthorized membership of the CSG ID.

8. The method of claim 7, further comprising determining whether the allowed CSG list comprises another CSG ID in response to removing the CSG ID, searching for other cellular stations associated with the another CSG ID or a macro cellular station in response to the allowed CSG list comprising the another CSG ID, and reselecting to one of the searched cellular stations or the macro cellular station from the cellular station.

9. The method of claim 8, further comprising searching for other cellular stations not associated with any CSG ID in response to the allowed CSG list not comprising any CSG ID, and reselecting to one of the searched cellular stations from the cellular station.

10. The method of claim 9, further comprising stopping searching for cellular stations associated with any CSG ID after reselecting to the one of the searched cellular stations, and stopping transmitting a proximity indication to the service network when detecting nearness to the cellular station

11. The method of claim 7, wherein the CS domain request message is a LOCATION UPDATING REQUEST or CM SERVICE REQUEST message, the rejection message corresponding to the CS domain request message is a LOCATION UPDATING REJECT or CM SERVICE REJECT message, the PS domain request message is a one of the following:
a SERVICE REQUEST message;
an ATTACH REQUEST message;
a ROUTING AREA UPDATE REQUEST message; and
a TRACKING AREA UPDATE REQUEST message;
and the rejection message corresponding to the PS domain request message is one of the following:
a SERVICE REJECT message;
an ATTACH REJECT message;
a ROUTING AREA UPDATE REJECT message; and
a TRACKING AREA UPDATE REJECT message.

12. A service network, comprising:
a cellular station, associated with a Closed Subscriber Group (CSG) identification (ID) and configured to operate in a hybrid access mode, performing wireless transceiving to and from a mobile communication device; and
a control node, receiving a Circuit Switched (CS) or Packet Switched (PS) domain request message from the mobile communication device via the cellular station, determining whether the cellular station has authorized membership of the CSG ID in response to the CS or PS domain request message, and transmitting a rejection message with a rejection cause to the mobile communication device via the cellular station in response to the mobile communication device not having authorized membership of the CSG ID.

13. The service network of claim 12, wherein the rejection cause indicates unauthorized membership of the CSG ID, so that the mobile communication device removes the CSG ID from an allowed CSG list.

14. The service network of claim 12, wherein the CS domain request message is a LOCATION UPDATING REQUEST or CM SERVICE REQUEST message, and the rejection message corresponding to the CS domain request message is a LOCATION UPDATING REJECT or CM SERVICE REJECT message.

15. The service network of claim 12, wherein the PS domain request message is a one of the following:
a SERVICE REQUEST message;
an ATTACH REQUEST message;
a ROUTING AREA UPDATE REQUEST message; and
a TRACKING AREA UPDATE REQUEST message;
and the rejection message corresponding to the PS domain request message is one of the following:
a SERVICE REJECT message;
an ATTACH REJECT message;
a ROUTING AREA UPDATE REJECT message; and
a TRACKING AREA UPDATE REJECT message.
